# EUROPEAN PATENT SPECIFICATION

(11) **EP 2 450 641 B1**
(45) Date of publication and mention of the grant of the patent: **27.12.2017**
(21) Application number: 11187468.1
(22) Date of filing: 02.11.2011
(51) Int. Cl.: F24F 12/00, F24F 7/00, F24F 1/00

(54) **An installation for heat recovery from exhaust air using a heat pump, and a building comprising said installation**
Einrichtung zur Wärmerückgewinnung aus Abluft mit einer Wärmepumpe, und ein diese Installation enthaltendes Gebäude
Installation pour la récupération de chaleur de l'air d'évacuation utilisant une pompe à chaleur, et bâtiment comportant cette installation

(30) Priority: 03.11.2010 SE 1051153
(43) Date of publication of application: 09.05.2012
(73) Proprietor: Climate Solutions LNRJ AB, 136 50 Haninge (SE); Climate Solutions Sweden AB, 136 50 Haninge (SE)
(72) Inventor: Forsman, Bertil, SE-136 50 Haninge (SE)
(74) Representative: Berglund, Stefan

(56) References cited:
- WO-A1-2007/095985
- DE-A1- 19 614 913
- DE-U1-202004 014 211
- US-B2- 6 694 769

## Description

### FIELD OF THE INVENTION

The present invention refers generally to heating of a building by using an exhaust air heat pump. Especially, the invention refers to a heat recovery installation according to the pre-characterised portion of claim 1.

DE 196 14 913 shows a heat recovery installation according to the pre-characterizing portion of claim 1.

### BACKGROUND OF THE INVENTION AND PRIOR ART

It has been known to use an exhaust air heat pump for heating buildings. The heat pump is placed in the vicinity of the heating station for the building's hydronic heating system, usually in a basement or a ground floor. Exhaust air heat pumps for apartment buildings exist in low scale and have today the outline of a heat pump of type liquid - liquid being placed in the vicinity of the station of the buildings hydronic heating system, usually in the basement or ground floor, and whereby heat from the building's ventilation air is extracted by placing an air - liquid heat exchanger in the building's exhaust air channel(s) which is connected through a circulating fluid circuit to the heat pump evaporator part.

A problem that exists with the heating systems, which use an exhaust air heat pump, is that the heat production is not sufficient to heat a building such as an apartment building or a factory building. The disadvantage of existing solutions is that the amount of heat that can be extracted from the exhaust air with the known technique represents only about 30 - 50% of the building's heat requirement. This depends mainly on the fact that the air in the air - water heat exchanger cannot be cooled to temperatures below about 3-5°C, because otherwise there occurs icing in the heat exchanger's air passages. This is associated with difficulties to apply a well-functioning defrosting function in the heat exchanger. Another reason is that the heat pumps, which are used today, are not adapted for operations with low cold transfer medium- and evaporation temperatures. Especially when it is the coldest, the heat requirement usually needs to be complemented with an additional heating system, such as for example an additional heat pump, district central heating, a wood- or fossil-fired boiler or an immersion heater.

Thus, there is a need to be able to heat a building in an economically advantageous manner, preferably by recovering heat that leaves the building, for example, from exhaust air.

### SUMMARY OF THE INVENTION

The object of the present invention is to overcome the above mentioned problems and to provide a heat recovery installation, which has the capability to produce enough heat to be able to satisfy the heat requirement in a building.

A further object is to achieve a heat recovery installation with a heat pump that can deliver a heating output with less energy consumption than conventional heat pumps and that can meet the bulk of the buildings' heat requirement.

The object is achieved by the heat recovery installation as defined in the pre-characterized portion of claim 1, which comprises the features defined in the characterizing portion of claim 1.

In buildings a ventilation system is present where the exhaust air from different apartments and different floors is collected above the top floor. This exhaust air is discharged from the building through for example the chimney. The advantage of the present invention is that the existing ventilation system can be used without the need for investments in reconstruction for installation of an additional heating system in the building. Another advantage is that the collected heat that is contained in the exhaust air is reused to heat the building. Besides, both the water in the radiators and in the tap water system can be heated. Further advantages of the heat recovery installation according to the invention are that the heat recovery installation uses waste heat, for example from humans, domestic appliances, laundry room, sauna, computers, solar radiation, etc. for heating the building.

According to an alternative embodiment of the invention, the heat pump is arranged to provide cooling of the exhaust air to a temperature below minus 10°C. This additional cooling of the air increases the yield of the heat recovery installation. This additional cooling is made possible because the heat pump has an implementation such as well dimensioned evaporator surfaces and a demand-controlled defrosting function.

According to another embodiment of the invention, the heat recovery installation comprises a common outgoing air chamber into which the exhaust air channel or channels lead and from which the second fan removes the exhaust air via the outgoing air channel, whereby the heat pump is arranged such that the exhaust air that passes the evaporator is led from and to the outgoing air chamber.

According to one embodiment of the invention, the first fan is set up to recirculate the flow of the exhaust air through the heat pump in the event that the heat pump's dimensioned air flow is higher than the outgoing air flow. The advantage of recirculation of the exhaust air is that this creates the possibility to take out even more heat from the exhaust air and thereby further increase the yield of the heat recovery installation.

According to another embodiment of the invention, the heat recovery installation comprises a valve, which is arranged to regulate the air flow between the exhaust air channel and the outgoing air channel, such that at least a part of the exhaust air is recirculated through the heat pump. The advantage of such a valve is that it can also regulate recirculation of the exhaust air in the heat recovery installation. Especially in absence of the second fan, a further regulation of recirculation of the exhaust air may be needed.

According to a further embodiment, the heat recovery installation comprises a variable speed control of the first fan arranged to regulate the air flow between the exhaust air channel and the outgoing air channel. With help of variable speed control, the air flow can also be regulated. Especially in absence of the second fan, a further regulation of the flow may be needed.

According to one embodiment of the invention, a flow rate may be between 0.20 and 0.50 l/s/m².

According to another embodiment of the invention, the flow rate is changed with help of the second fan in the outgoing air channel or with help of the first fan.

Preferably, the installation is connected to the existing ventilation system in the building. In many buildings there is an outgoing air chamber or an outgoing air room where the installation can be placed without major installation costs.

According to an embodiment of the invention, the heat pump in the heat recovery installation is arranged to provide cooling of the exhaust air to a temperature below minus 10°C. This additional cooling of the air increases the yield of the heat recovery installation.

According to another embodiment of the invention, the first fan in the heat recovery installation is set up to recirculate the flow of the exhaust air through the heat pump in the event that the heat pump's dimensioned air flow is higher than the outgoing air flow.

According to a further embodiment of the invention, the heat recovery installation comprises a valve, which is arranged to regulate the air flow between the exhaust air channel and the outgoing air channel such that at least a part of the exhaust air is recirculated through the heat pump.

According to one embodiment of the invention, the heat recovery installation comprises a variable speed control of the first fan to regulate the air flow between the exhaust air channel and the outgoing air channel.

According to another embodiment of the invention, the flow rate is changed with help of the second fan in the outgoing air channel or with help of the first fan.

The object is also achieved by a use of the heat recovery installation where the heat recovery installation is placed in a building, which comprises several rooms divided over at least one floor, at least above said floor.

### BRIEF DESCRIPTION OF THE DRAWINGS

Fig 1 shows schematically a building with supply- and exhaust air channels.
Fig 2 shows schematically a heat recovery installation.
Fig 3 shows different embodiments of the heat recovery installation of Fig 2.

### DETAILED DESCRIPTION OF THE VARIOUS EMBODIMENTS OF THE INVENTION.

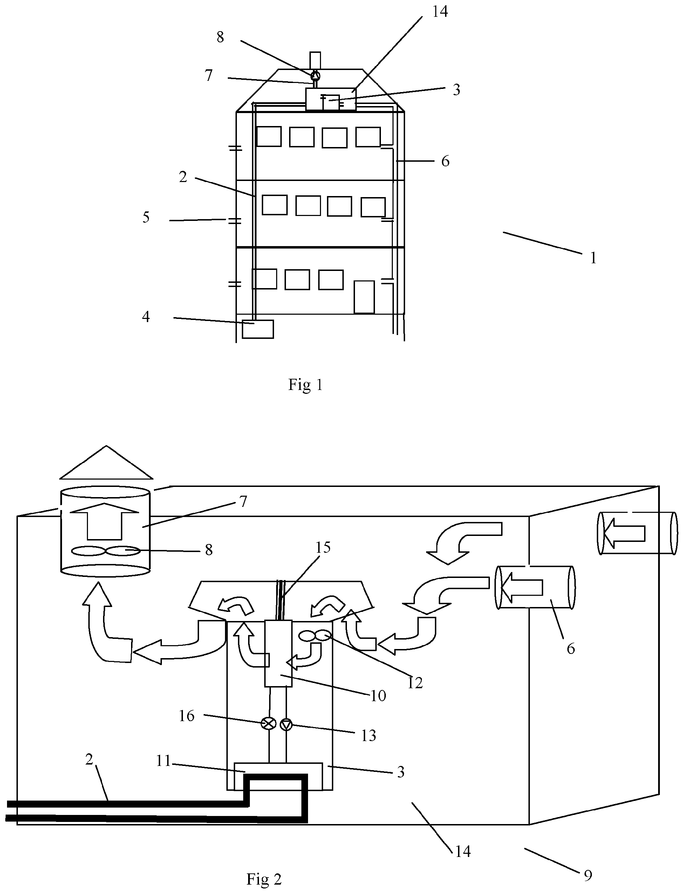

Fig 1 shows a building 1. The building 1 may be an apartment building such as a block of flats with several rooms divided over several floors or a factory with a number of larger rooms. The number of apartments and the number of floors in the building 1 may vary and are in principle unlimited. If necessary, additional heat pumps 3 can be installed.

The building 1 has a hydronic heating system for heating the building 1.

The building 1 has also one or more supply air members 5 for supply of air to the different rooms. The building 1 has one or more exhaust air channels 6 for collection and removal of exhaust air from the different rooms. The collected exhaust air is conducted to the heat pump 3 and then out of the building 1 through an outgoing air channel 7. Fig 2 shows a heat recovery installation 7 that includes a second fan 8, which regulates the exhaust air flow through the outgoing air- and exhaust air channels 6, 7. The heat recovery installation 9 also includes said heat pump 3. The heat pump 3 comprises a refrigerant circuit with an evaporator 10, a condenser 11, one or more compressors 13 and an expansion valve 16. The evaporator 10 is arranged such that the exhaust air from the exhaust air channel 6 passes the evaporator 10 in heat-transferring contact. The condenser 11 is arranged to heat the water in the water conduit 2. The water that is heated in the heat pump 3 can be used for both heating the water in the hydronic heating system and for heating the tap water. The heat pump 3 also includes a first fan 12 that regulates the exhaust air flow through the heat pump 3. The compressor 13 is set up to regulate the heating output of the heat pump 3, depending on the need, either by connecting multiple compressors 13 in several steps and/or through variable speed control. The heat recovery installation 9 is placed at least above said floor.

The heat pump 3 can be arranged to cool the exhaust air to different temperatures. The heat pump 3 may provide cooling of the air to a temperature below minus 10°C, or below minus 15°C, or below minus 20°C, or below minus 25°C or to an even lower temperature. Icing of the evaporator 10 may be eliminated with help of a defrosting automation, which can be time controlled or demand controlled and which may be comprised by the heat pump 3 or the heat recovery installation 9.

Many buildings 1 comprise a common outgoing air chamber 14 into which the exhaust air channel or channels 6 lead. Alternatively, such an outgoing air chamber 14 can be built, for example around the heat pump 3. The outgoing air chamber 14 may be isolated. Usually there is a negative pressure in the outgoing air chamber 14 such that the exhaust air automatically flows to the outgoing air chamber 14. The exhaust air can thereby pass the heat pump 3 and leave the outgoing air chamber 14 through the outgoing air channel 7, which extends from the outgoing air chamber 14. With help of the first and second fan 12, 8, the exhaust air can be removed through the exhaust air channel 7. All heat from the exhaust air cannot always be taken up by the heat pump 3 after that the exhaust air has passed through the heat pump 3 only once. Thus, this exhaust air that has passed the heat pump 3 still comprises heat. To increase the yield of the heat recovery installation 9, the heat pump 3 may be arranged in such a way that the exhaust air that passes the evaporator 10 is led from and to the outgoing air chamber 14, in such a way that the exhaust air, or at least a part of the exhaust air, is recirculated and passes the heat pump 3 more than once.

The second fan 8 in the outgoing air channel 7 regulates a flow rate of the exhaust air. The flow rate may be between 0.20 and 0.50 l/s/m², or between 0.30 and 0.40 l/s/m². When the flow rate needs to be changed, one can regulate this with help of the second fan 8 in the outgoing air channel 7 or with help of the first fan 12. The heat recovery installation 9 may even comprise a variable speed control of the first fan 12 to regulate the air flow between the exhaust air channel 6 and the outgoing air channel 7. Especially in a building with natural ventilation the first fan 12 may be used for evacuation and required exhaust air flow. The first fan 12 may be positioned in the heat pump 3, but may also be positioned outside the heat pump 3. This first fan 12 may be arranged to cooperate with the second fan 8, and can be set up to recirculate the flow of the exhaust air through the heat pump 3 in the event that the heat pump's dimensioned air flow is higher than the outgoing air flow. This results in a recirculation of the exhaust air such that the exhaust air can be cooled at least two or three or more times in the heat pump 3 before the exhaust air is led out of the outgoing air chamber 14 through the outgoing air channel 7.

The yield of the heat recovery installation 9 may also be increased by using a valve 15. The valve 15 can be positioned adjacent to or in the heat pump 3 between the exhaust air channel 6 and the outgoing air channel 7. The valve 15 can be the only or a further device to regulate the air flow between the exhaust air channel 6 and the outgoing air channel 7, such that at least a part of the exhaust air is recirculated through the heat pump 3.

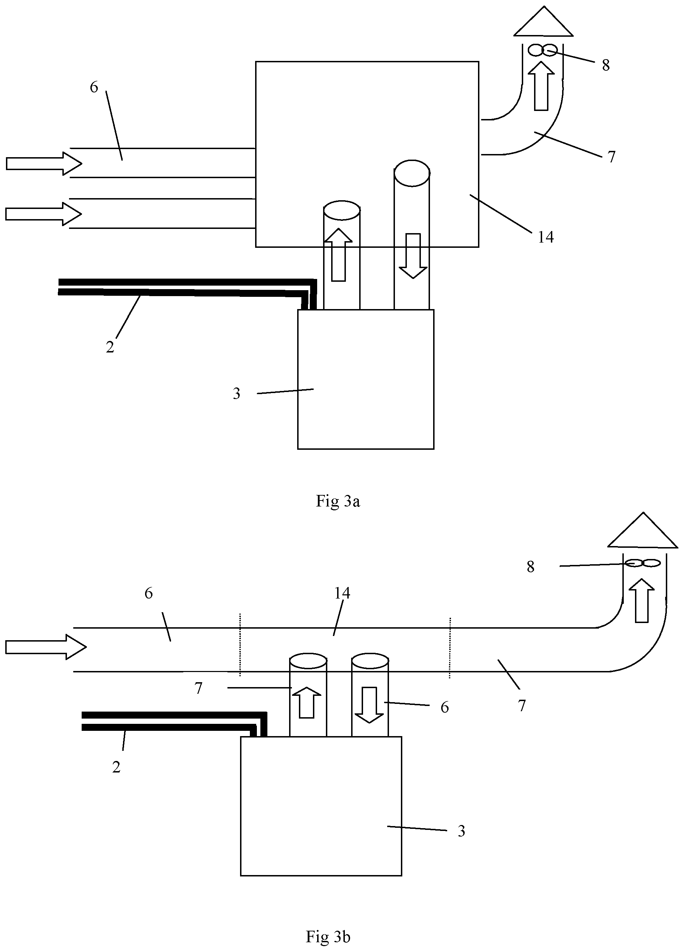

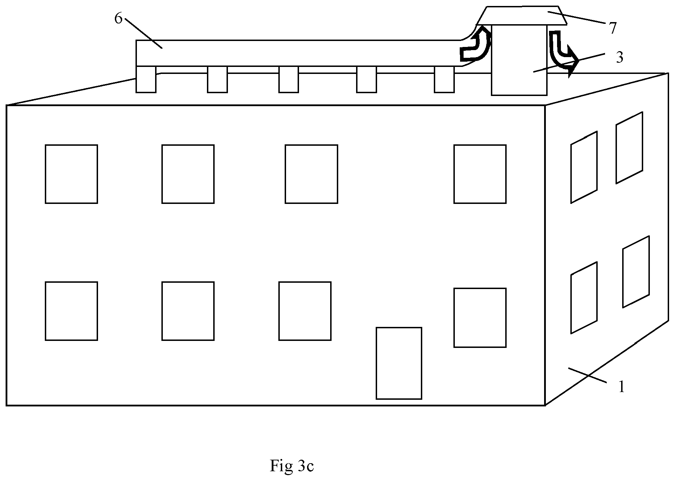

The heat recovery installation 9 is placed in the attic or on the roof of the building. Fig 3 shows different embodiments of the present invention. In Fig 3a and 3b the exhaust air is collected in an outgoing air chamber 14. In fig 3b the outgoing air chamber 14 is formed from a part of the exhaust air channel 6 and/or the outgoing air channel 7. The exhaust air channel 6 may be placed in the attic or under the roof. In Fig 3c the exhaust air channel 6 and the heat pump 3 are placed on the roof of the building 1.

For heating of hot water, a storage tank (not shown) may be used. The storage tank may have heating coils, which can be built into the tank.

The heat pump 3 may have a control- and monitoring system (not shown) with a function for measuring energy consumption. This function can be built into the heat pump 3. The monitoring system may be in contact with a central unit. Information of the monitoring system can be transferred via a cable connection or wireless. The monitoring system can be an internet-based system.

In the case additional heat would be required, built-in immersion heaters in the heat pump 3 can be used. The immersion heaters can usually produce 9 kW. As an alternative, one can combine the heat recovery installation 9 according to the invention with solar heating. The storage tank that is used for hot water can be supplied with built-in solar coils, which are arranged to heat from the sun.

During the summer, the heat recovery installation 9 may also be used to cool the temperature in the building 1 by adapting the heat pump 3 for cooling in a, for the skilled person, known manner.

The invention is not limited to the above shown embodiment but may be varied and modified within the scope of the following patent claims.

## Claims

1. A heat recovery installation (9) suitable for a building (1), which comprises several rooms divided over at least one floor, whereby the building (1) comprises
- a hydronic heating systems,
- one or more supply air members (5) for supply of air to the different rooms,
- one or more exhaust air channels (6) for collecting and removal of exhaust air from the different rooms,
- an outgoing air channel (7) for removal of the collected exhaust air out of the building (1), and
whereby the heat recovery installation (9) comprises
- a heat pump (3), which comprises
- an evaporator (10), which is arranged such that the exhaust air from the exhaust air channel (6) passes the evaporator (10) in heat-transferring contact,
- a condenser (11), which is arranged to heat the water in the water conduit (2),
- a first fan (12), which regulates the exhaust air flow through the heat pump (3),
- at least one compressor (13), which is set up to regulate the heating output of the heat pump (3), and
- a water conduit (2) for transport of the heated water between the heat pump (3) and a heating station (4),
**characterized in that** the heat recovery installation (9) comprises a second fan (8), which regulates the exhaust air flow through the outgoing air- and exhaust air channel (7, 6), and
a common outgoing air chamber (14) into which the exhaust air channel or channels (6) lead and from which the second fan (8) removes the exhaust air via the outgoing air channel (7),
whereby the heat pump (3) is arranged such that the exhaust air, or at least a part of the exhaust air, is recirculated and passes the heat pump (3) more than once.

2. The installation according to claim 1, **characterized in that** the heat pump (3) is arranged to provide cooling of the exhaust air to a temperature below minus 10°C.

3. The installation according to claim 1 or 2, **characterized in that** the first fan (12) is set up to recirculate the flow of the exhaust air through the heat pump (3) in the event that the heat pump's dimensioned air flow is higher than the outgoing air flow.

4. The installation according to any one of claims 1 to 3, **characterized in that** the heat recovery installation (9) comprises a valve (15), which is arranged to regulate the air flow between the exhaust air channel (6) and the outgoing air channel (7), such that at least a part of the exhaust air is recirculated through the heat pump (3).

5. The installation according to any one of claims 1 to 4, **characterized in that** the heat recovery installation (9) comprises a variable speed control of the first fan (12) to regulate the air flow between the exhaust air channel (6) and the outgoing air channel (7).

6. The installation according to any one of claims 1 to 5, **characterized in that** a flow rate may be between 0.20 and 0.50 l/s/m².

7. Use of the heat recovery installation (9) according to any one of claims 1 to 6, in a building (1) **characterized in that** the heat recovery installation (9) is placed in a building (1), which comprises several rooms divided over at least one floor, at least above said floor.

## Patentansprüche

1. Wärmerückgewinnungseinrichtung (9), die für ein Gebäude (1) geeignet ist, das mehrere Zimmer umfasst, die über mindestens ein Stockwerk verteilt sind, wobei das Gebäude (1)
- ein hydronisches Erwärmungssystem,
- ein oder mehrere Zuführluftglieder (5) zum Zuführen von Luft an die verschiedenen Räume,
- einen oder mehrere Abluftkanäle (6) zum Sammeln und Abführen von Abluft aus den verschiedenen Räumen,
- einen Abgangsluftkanal (7) zum Abführen der gesammelten Abluft aus dem Gebäude (1) heraus, umfasst, und
wobei die Wärmerückgewinnungseinrichtung (9)
- eine Wärmepumpe (3), die
- einen Verdampfer (10), der so angeordnet ist, dass die Abluft von dem Abluftkanal (6) den Verdampfer (10) in wärmeübertragendem Kontakt passiert,
- einen Verflüssiger (11), der dafür angeordnet ist, das Wasser in der Wasserleitung (2) zu erwärmen,
- ein erstes Gebläse (12), das die Abluftströmung durch die Wärmepumpe (3) hindurch reguliert,
- mindestens einen Verdichter (13), der dafür eingerichtet ist, die Erwärmungsausgabe der Wärmepumpe (3) zu regulieren,
umfasst, und
- eine Wasserleitung (2) zum Transport des erwärmten Wassers zwischen der Wärmepumpe (3) und einer Erwärmungsstation (4)
umfasst,
**dadurch gekennzeichnet, dass** die Wärmerückgewinnungseinrichtung (9) ein zweites Gebläse (8), das die Abluftströmung durch den Abgangsluft- und Abluftkanal (7, 6) hindurch reguliert, und
eine gemeinsame Abgangsluftkammer (14), in die der Abluftkanal oder die Abluftkanäle (6) hineinführen und aus der das zweite Gebläse (8) die Abluft über den Abgangsluftkanal (7) abführt, umfasst,
wobei die Wärmepumpe (3) so angeordnet ist, dass die Abluft oder mindestens ein Teil der Abluft wieder in Umlauf gebracht wird und die Wärmepumpe (3) mehr als einmal passiert.

2. Einrichtung nach Anspruch 1, **dadurch gekennzeichnet, dass** die Wärmepumpe (3) dafür angeordnet ist, Kühlung der Abluft auf eine Temperatur unterhalb von minus 10 °C bereitzustellen.

3. Einrichtung nach Anspruch 1 oder 2, **dadurch gekennzeichnet, dass** das erste Gebläse (12) dafür eingerichtet ist, die Strömung der Abluft in dem Fall durch die Wärmepumpe (3) hindurch wieder in Umlauf zu bringen, wenn eine dimensionierte Luftströmung der Wärmepumpe höher als die Abgangsluftströmung ist.

4. Einrichtung nach einem der Ansprüche 1 bis 3, **dadurch gekennzeichnet, dass** die Wärmerückgewinnungseinrichtung (9) ein Ventil (15) umfasst, das dafür angeordnet ist, die Luftströmung zwischen dem Abluftkanal (6) und dem Abgangsluftkanal (7) zu regulieren, sodass mindestens ein Teil der Abluft durch die Wärmepumpe (3) hindurch wieder in Umlauf gebracht wird.

5. Einrichtung nach einem der Ansprüche 1 bis 4, **dadurch gekennzeichnet, dass** die Wärmerückgewinnungseinrichtung (9) eine variable Geschwindigkeitssteuerung des ersten Gebläses (12) umfasst, um die Luftströmung zwischen dem Abluftkanal (6) und dem Abgangsluftkanal (7) zu regulieren.

6. Einrichtung nach einem der Ansprüche 1 bis 5, **dadurch gekennzeichnet, dass** eine Strömungsrate zwischen 0,20 und 0,50 l/s/m² liegen kann.

7. Verwendung der Wärmerückgewinnungseinrichtung (9) nach einem der Ansprüche 1 bis 6 in einem Gebäude (1), **dadurch gekennzeichnet, dass** die Wärmerückgewinnungseinrichtung (9) in einem Gebäude (1), das mehrere Zimmer umfasst, die über mindestens ein Stockwerk verteilt sind, mindestens oberhalb des Stockwerks platziert ist.

## Revendications

1. Installation de récupération de chaleur (9) adaptée à un bâtiment (1) comprenant plusieurs pièces réparties sur au moins un niveau, ledit bâtiment (1) comprenant :
- un système de chauffage hydronique,
- un ou plusieurs éléments d'apport d'air (5) destinés à apporter de l'air aux différentes pièces,
- un ou plusieurs canaux d'air à évacuer (6) destinés à recueillir et à éliminer l'air à évacuer hors des différentes pièces,
- un canal d'air à expulser (7) destiné à l'élimination, hors du bâtiment (1), de l'air à évacuer recueilli ; et
ladite installation de récupération de chaleur (9) comprenant :
- une pompe à chaleur (3), laquelle comprend :
- un évaporateur (10), qui est agencé de manière que l'air à évacuer issu du canal d'air à évacuer (6) traverse l'évaporateur (10) selon un contact permettant le transfert de chaleur, et
- un condensateur (11), qui est agencé pour chauffer l'eau de la conduite d'eau (2),
- un premier ventilateur (12), qui régule le flux d'air à évacuer traversant la pompe à chaleur (3),
- au moins un compresseur (13), qui est réglé pour réguler le rendement thermique de la pompe à chaleur (3), et
- une conduite d'eau (2) destinée au transport de l'eau chauffée, entre la pompe à chaleur (3) et une station de chauffage (4),
**caractérisée en ce que** l'installation de récupération de chaleur (9) comprend un second ventilateur (8), qui régule le flux d'air à évacuer traversant le canal d'air à expulser et le canal d'air à évacuer (7, 6), et
une chambre commune d'air à expulser (14) vers laquelle mènent le ou les canaux d'air à évacuer (6) et hors de laquelle le second ventilateur (8) élimine l'air à évacuer par le biais du canal d'air à expulser (7),
ladite pompe à chaleur (3) étant agencée de manière que l'air à évacuer, ou au moins une partie de l'air à évacuer, soit recirculé et traverse la pompe à chaleur (3) plus d'une fois.

2. Installation selon la revendication 1, **caractérisée en ce que** la pompe à chaleur (3) est agencée pour assurer un refroidissement de l'air à évacuer à une température inférieure à moins 10 °C.

3. Installation selon la revendication 1 ou 2, **caractérisée en ce que** le premier ventilateur (12) est réglé pour faire recirculer, à travers la pompe à chaleur (3), le flux d'air à évacuer au cas où le débit d'air dimensionné pour la pompe à chaleur est supérieur au débit d'air à expulser.

4. Installation selon l'une quelconque des revendications 1 à 3, **caractérisée en ce que** l'installation de récupération de chaleur (9) comprend une vanne (15), qui est agencée pour réguler le débit d'air entre le canal d'air à évacuer (6) et le canal d'air à expulser (7) de manière qu'au moins une partie de l'air à évacuer soit recirculée à travers la pompe à chaleur (3).

5. Installation selon l'une quelconque des revendications 1 à 4, **caractérisée en ce que** l'installation de récupération de chaleur (9) comprend une commande variable de la vitesse du premier ventilateur (12) permettant de réguler le débit d'air entre le canal d'air à évacuer (6) et le canal d'air à expulser (7).

6. Installation selon l'une quelconque des revendications 1 à 5, **caractérisée en ce que** le débit peut se situer entre 0,20 et 0,50 l/s/m².

7. Utilisation de l'installation de récupération de chaleur (9) selon l'une quelconque des revendications 1 à 6, dans un bâtiment (1), **caractérisée en ce que** l'installation de récupération de chaleur (9) est installée dans un bâtiment (1), comprenant plusieurs pièces reparties sur au moins un niveau, au moins au-dessus dudit niveau.
